(19) Europäisches Patentamt
European Patent Office
Office européen des brevets

(11) **EP 3 792 830 A1**

(12) **EUROPEAN PATENT APPLICATION**

(43) Date of publication:
**17.03.2021 Bulletin 2021/11**

(51) Int Cl.:
***G06N 3/04*** *(2006.01)*      ***G06N 3/08*** *(2006.01)*

(21) Application number: **19196417.0**

(22) Date of filing: **10.09.2019**

| | |
|---|---|
| (84) Designated Contracting States:<br>**AL AT BE BG CH CY CZ DE DK EE ES FI FR GB<br>GR HR HU IE IS IT LI LT LU LV MC MK MT NL NO<br>PL PT RO RS SE SI SK SM TR**<br>Designated Extension States:<br>**BA ME**<br>Designated Validation States:<br>**KH MA MD TN** | (71) Applicant: **Robert Bosch GmbH<br>70442 Stuttgart (DE)**<br><br>(72) Inventors:<br>• **Zhang, Dan**<br>  **71229 Leonberg (DE)**<br>• **Khoreva, Anna**<br>  **70197 Stuttgart (DE)** |

(54) **TRAINING A CLASS-CONDITIONAL GENERATIVE ADVERSERIAL NETWORK**

(57)    A computer-implemented method and system are described for training a class-conditional generative adversarial network (GAN). The discriminator is trained using a classification loss function while omitting using an adversarial loss function. Instead, if the training data has C classes, the classification loss function is formulated as a 2C-class classification problem, by which the discriminator is trained to distinguish 2 times C classes. It is shown that such trained discriminator provides an informative training signal for the generator to learn the class-conditional data synthesis by the generator. Furthermore, a data synthesis system and computer-implemented method are described for synthesizing data using the generative part of the trained generative adversarial network.

$$y_{pred} = \begin{cases} y_d & if\ x = x_d \\ y_g + C & if\ x = x_g \end{cases}$$

Fig. 2

**Description**

**FIELD OF THE INVENTION**

The invention relates to a computer-implemented method and system for training a generative adversarial network. The invention further relates to a computer-implemented method and system for using a generative model of a trained generative adversarial network, for example for data synthesis, anomaly detection and/or for missing data imputation. The invention further relates to a computer-readable medium comprising at least a generative model of the trained generative adversarial network, and to a computer-readable medium comprising data representing instructions arranged to cause a processor system to perform at least one of the computer-implemented methods.

**BACKGROUND OF THE INVENTION**

Generative Adversarial Networks (GANs) have been introduced by Ian Goodfellow et. al. in 2014 [1]. In their paper, a framework is proposed for estimating generative models via adversarial networks, in which two models are simultaneously trained: a generative model that captures a data distribution to be learned, and a discriminative model that estimates the probability that an input instance is obtained from the training data (input is 'real') rather than from the generative model (input is 'fake'). In the following, the generative model may also be referred to as 'generator' or simply as 'G' and the discriminative model may also be referred to as 'discriminator' or simply as 'D'.

Recent research has shown that the generative models of such trained generative adversarial networks are capable of synthesizing naturally looking images at high resolution and at sufficient quality to fool even human observers, in particular when deep generative models are used such as so-called 'deep' convolutional neural networks.

There are also many other real-world applications of trained GANs, and specifically of the trained generative models of trained GANs, ranging from anomaly detection, synthetic data generation for machine learning of a further machine learnable model, to missing data imputation, for example for inpainting of occluded image regions.

For example, the field of autonomous driving, a trained GANs may be used to generate 'edge case' scenarios for autonomous driving, e.g., synthetic images representing near collisions, which may be used to test and verify the performance of autonomous driving algorithms and systems in such scenarios. In a specific example, the synthetic images may be used to train a machine learnable model, such as a neural network, which may be used as part of a system controlling the steering and/or the braking of the autonomous vehicle.

The training of a GAN typically involves the following. The generative model G may be configured to generate synthesized output instances from noisy samples ('latent vector') from a latent space. The discriminative model D may be trained to discriminate between input instances originating from the generative model G and the training data. The generative model G may be trained to generate synthesized output instances from noisy samples which maximize a discrimination error when the discriminative model D is applied to the synthesized output instances. Each iteration of the training may involve alternatingly training the discriminative model D and the generative model G by updating the weights of the respective models, for example by computing gradients through backpropagation.

GANs may be trained to synthesize data within a specific class. For example, a GANs may be trained to synthesize images of pets such as dogs, cats, etc., with "dog", "cat", etc. each representing a (semantic representation of a) class label. Here, the term 'label' may refer to an identifier of a class, which may typically be a numerical identifier but which in the following may also be referred to by its semantic interpretation. Such class-based data synthesis may also be referred to as 'class-conditional' or 'label-conditional' data synthesis, while such GANs may as be referred to as class-conditional or label-conditional GANs, with both terms being in the following used interchangeably. Examples of class-conditional GANs are known from publications [2]-[5] and may in many cases provide certain advantages over GANs which are not class-conditionally trained. For example, supervised learning may require labelled data, which may be generated by a trained class-conditional GAN as a combination of the GAN's input target class and its synthesized output.

In general, the benefits of GANs may come at a cost. Namely, GANs are hard to train, as they comprise not one but two main components that may work adversarially in a zero-sum game and may be trained to find a Nash equilibrium. Moreover, for class-conditional GANs, the adversarial loss term in the training objective of the discriminator does not ensure that the discriminator learns class-relevant information. While it is known to use an auxiliary classification loss term ('auxiliary classifier', AC) to cause the discriminator to learn such class-relevant information, such a term has been found to be insufficiently accurate. Disadvantageously, in practical training of class-conditional GANs, the combination of an adversarial loss term and an auxiliary classifier may be unstable [5].

**References**

[1] Generative Adversarial Networks, https://arxiv.org/abs/1406.2661

[2] Conditional Image Synthesis With Auxiliary Classifier GANs, https://arxiv.org/abs/1610.09585

[3] CausalGAN: Learning Causal Implicit Generative Models with Adversarial Training, https://arxiv.org/abs/1709.02023

[4] Rob-GAN: Generator, Discriminator, and Adversarial Attacker, https://arxiv.org/abs/1807.10454

[5] cGANs with Projection Discriminator, https://arxiv.org/abs/1802.05637

## SUMMARY OF THE INVENTION

It may be desirable to be able to improve the training of a class-conditional generative adversarial network by addressing at least one of the above disadvantages.

In accordance with a first aspect of the invention, a computer-implemented method and system are provided for training a generative adversarial network, as defined by claim 1 and 13, respectively. In accordance with a further aspect of the invention, as defined by claim 12, a computer-readable medium is provided comprising a trained generative model. In accordance with a further aspect of the invention, as defined by claim 11, a computer-readable medium is provided comprising a computer program which comprises instructions for causing a processor system to perform the computer-implemented method.

The above measures provide a training of a class-conditional GAN which may involve accessing training data which comprises training data instances, such as images, audio fragments, text fragments, etc. and corresponding training data labels. The training data labels may represent classes from a set of classes, which may in total amount to $C$ classes, e.g., $\{0,1,..., C - 1\}$. Such classes may have a semantic meaning, e.g., 'dog', but may be expressed numerically or in general in any computer-readable manner.

As is known per se, the generative model G may be configured, e.g., in terms of model architecture and parameters, to generate synthesized output instances, such as synthesized images, audio fragments, text fragments, etc., based on respective latent vectors $z$ sampled from a latent space and based on input labels $y_g$ which are selected from the set of classes $C$ and which are here and elsewhere referred to as generator input labels'. The discriminative model D may be configured to classify input instances, which may be either input instances obtained from the training data, i.e., training data instances $x_d$, or input instances obtained from the generative model G, i.e., synthesized output instances $x_g$. The training at this level of generality is known per se, for example from references [2] - [5].

In accordance with the above measures, the discriminative model D is trained on prediction targets. However, unlike known training methods, separate prediction targets may be provided for the training data instances $x_d$ and the synthesized output instances $x_g$. Namely, while both types of data instances are associated with a same set of classes $C$, either by original labelling of the training data or by the generative model G synthesizing output within a specified class c from set of classes $C$, both types of data instances are assigned different classes as prediction targets for the training of the discriminative model D.

More specifically, while the prediction targets for the training data instances $x_d$ may be the training data labels $y_d$, the prediction targets for the synthesized output instances $x_g$ may be generated by the method and system to be separate classes from those used as prediction targets for the training data instances. In particular, the prediction targets for the synthesized output instances $x_g$ may be generated by assigning the generator input labels $y_g$ to a further set of classes $\{C, C + 1,... ,2C - 1\}$ in which each class $c$ of the set of classes is represented by a corresponding further class, e.g., $c + C$. Effectively, each class c may be represented twice as a prediction target, namely once for the training data ('real') and once as a separate class for the generative model output ('fake').

Effectively, the discriminative model D may be trained using a different, nonoverlapping set of classes for the training data instances $x_d$ than for the synthesized output instances $x_g$. Thereby, the classification by the discriminative model D may be modified from the known $C$-class classification problem ([2] - [4]) to a $2C$-class classification problem.

Furthermore, in accordance with the above measures, the generative model G may be trained using a new informative signal obtained from the discriminative model D. Namely, by providing the prediction targets as elucidated above, the discriminative model D may generate respective conditional probabilities that an input instance $x$ belongs to a class, e.g., $y = c$, of the set of classes or to a corresponding class, e.g., $y = c + C$, of the further set of classes. More specifically, the discriminative model D may provide the informative signal based on a first conditional probability that an input instance $x$ belongs to a class of the set of classes and a second conditional probability that the input instance $x$ belongs to a corresponding class of the further set of classes. Both conditional probabilities may be informative to the generative model G as their relative probabilities may indicate the ability of the discriminative model D to distinguish the input instance $x$ as being either real or fake. For example, if both conditional probabilities for a given class $c$ are equal, i.e., $p(y = c|x_g) = p(y = c + C|x_g)$, this may indicate that the generative model G may be unable to distinguish the input instance $x$ as being either real or fake in the given class $c$. The generative model G may use the informative signal to try to learn to generate synthetic instances $x_g$ which will be predicted by the discriminative model D as belonging to the class $y = c$, i.e., being 'real', namely by increasing the probability score $p(y = c|x_g)$, i.e., the probability of being 'real', which at the same time implies reducing $p(y = c + C|x_g)$, i.e., the probability of being 'fake'.

Essentially, the discriminator may be trained using a classification loss function while omitting using an adversarial loss function. Instead, if the training data has $C$ classes, the classification loss function may be formulated as a $2C$-class classification problem, by which the discriminator is trained to distinguish 2 times $C$ classes. It is shown in this specification that such trained discriminator provides an informative training signal for the generator to learn the class-conditional data synthesis by the generator.

The above measures are based on the following insights, which are here explained within the context of learning to synthesize images of pets. As is known per se, the discriminator may be trained to model the distribution $P(y|x)$. With the training data $(x_t, y_t)$, the discriminator should yield $y_{pred} = argmaxP(y|x_t)$ such that it equals $y_t$. In other words, the training goal may be to map the discriminator's classification to the ground truth label. Given $\sum_y P(y|x) = 1$, when the discriminator assigns a high probability value for a particular class, say 'dog', then it has to assign a low probability for the class 'cat'. That implies the discriminator should learn dog-exclusive features for accomplishing the task.

An adversarial loss may be regarded as a two-class classification task, namely 'real' $(x_d, y_d = cat)$ vs. fake $(x_g, y_g = cat)$. Here, $(x_d, y_d)$ may during training be obtained from the training data, i.e., from $(x_t, y_t)$. Using an adversarial loss, the discriminator may be trained to tell $x_d$ and $x_g$ apart, but it is not guaranteed that the discriminator will exploit the class information. It could therefore happen that the discriminator uses artifacts which are present in $x_g$, for example in the image's background, to distinguish $x_g$ from $x_d$, without using 'cat information', referring to cat-exclusive features. It is also possible that the same criterion is reused in a different class, e.g., in the 'dog' class, to distinguish between real $(x_d, y_d = dog)$ vs. fake $(x_g, y_g = dog)$ images. When the discriminator does not use class relevant information to classify between real and fake examples in a given class, the generator won't be able to learn this information from the discriminator, e.g., from the discriminator's informative signal. Given the above, the generator may, when giving $y_g = cat$ as input, produce a real looking image but which may not necessarily look like a cat.

To avoid these and similar problems, the inventors have considered that training the discriminator to classify between real and fake may not be enough, but that it may be needed to train the discriminator to understand that $x_d$ is true *and it is a cat, not a dog.* This may be accomplished by the 2C class classification and by the corresponding informative signal which may be provided to the generator, which not only indicates true or fake (true: class with the highest probability is part of the first set of classes, i.e., $c \in \{0,1, ..., C - 1\}$, false: class with the highest probability is part of the second set of classes, i.e., $c \in \{C, C + 1,... ,2C - 1\}$), but also indicates to which class it belongs to, e.g., to 'dog' (e.g., $c = 1$ or $c = 11$ in case of $C = 10$) or 'cat' (e.g., $c = 3$ or $c = 13$ in case of $C = 10$).

Known class-conditional GANs which use an auxiliary classifier may rather classify C classes, and may thereby group training 'cat' images $x_d$ and synthesized 'cat' images $x_g$ to a same class 'cat'. A disadvantage of doing so is that the cat-exclusive features from the real data $x_d$ are mixed with any features of $x_g$, including its artifacts, which may lead to a suboptimal classification since the discriminator may try to learn to classify the cat class from the common features of $x_d$ and $x_g$. The 2C-class formulation replaces the adversarial loss but may also ensure that the discriminator learns to be class-specific while separating the real and fake classes. Compared to the training of a GAN which is based on a combination of an adversarial loss term and an auxiliary classifier, the training of the GAN as described in this specification may be more stable. Advantageously, the trained GAN may synthesize data instances which better conform to the originally modeled probability distribution, yielding for example synthetic images which look more realistic.

Optionally, the informative signal comprises a log-probability ratio $\left(\ln \frac{P(y = c|x)}{P(y = c + C|x)}\right)$ of a first conditional probability $(P(y = c|x))$ that the input instance $(x)$ belongs to the class $(y = c)$ of the set of classes and a second conditional probability $(P(y = c + C|x))$ that the input instance $(x)$ belongs to the corresponding class $(y = c + C)$ of the further set of classes. Such a log probability ratio may be directly used as a basis for computing divergence measures such as the KL divergence, reverse-KL divergence or JSD divergence of between $P_d(x,y)$ and $P_g(x,y)$, and accordingly, such different types of divergences may be used as the loss function for training the generative model G.

Optionally, training the generative model (G) comprises minimizing the KL divergence $\left(\min_G KL(P_g||P_d)\right)$ using the log-probability ratio of the first conditional probability and the second conditional probability.

Optionally, the labels define numerical classes from 0 to $C - 1$, and wherein assigning the generator input labels $(y_g)$ to the further set of classes $(\{C, C + 1,..., C - 1\})$ comprises adding a constant C to a numerical class $(c)$ of a respective generator input label. If there are a $C$-number of consecutively numbered numerical classes, separate classes maybe assigned to the synthesized output instances $x_g$ by simply adding a constant $C$ to each class number. This may represent simple and efficient way of assigning separate classes to the synthesized output instances $x_g$ for the purpose of obtaining prediction targets for the training of the discriminative model D.

Optionally, the training of the discriminative model (D) comprises using a classification loss term while omitting using an adversarial loss term. Unlike references [2] - [5], the adversarial loss term may be explicitly omitted, using instead a reformulation of the classification loss term, e.g. using the log-probability ratio.

Optionally, the method further comprises outputting trained model data representing at least the trained generative model of the trained generative adversarial network. This may allow the trained generative model to be used in applications such as, but not limited to, data synthesis, anomaly detection and missing data imputation.

The following embodiments describe uses of the trained generative model which may be performed after the training of the generative model, for example by same entity (method, system, etc.) but also by a separate entity (method, system, etc.)

Optionally, the trained generative model is used for data synthesis by:

- sampling a latent vector ($z$) from the latent space;
- selecting a generator input label ($y_g$) from the set of classes ($\{0,1, ..., C - 1\}$); and
- using the latent vector ($z$) and the generator input label ($y_g$) as input to the trained generative model to obtain a synthesized output instance ($x_g$)

Accordingly, the trained generative model may be used to synthesize data within a class, and may for example be used to generate labelled training data for the training of a machine learnable model, such as for example a neural network.

Optionally, when using the trained generative model for data synthesis, a machine learnable model may be trained using the synthesized output instances.

Optionally, the trained generative model is used for anomaly detection by:

- obtaining a data instance ($x^*$);
- obtaining a prediction of a label ($y_{pred}$) for the data instance ($x^*$);
- searching for a latent vector ($z^*$) which, when input to the trained generative model together with the label ($y_{pred}$), obtains a reconstruction of the data instance ($x^*$);
- determining the data instance ($x^*$) to represent an anomaly if, at least one of:

  - the latent vector ($z^*$) lies outside a support of a prior distribution of the latent space;
  - the latent vector ($z^*$) has a probability value which is below a probability threshold according to the prior distribution of the latent space; and
  - if a reconstruction error of the reconstruction by the trained generative model exceeds a reconstruction error threshold.

Optionally, the trained generative model is used for missing data imputation by:

- obtaining a data instance ($x^*$) which has a missing data part;
- searching for a combination of a latent vector ($z^*$) and a label ($y$) which according to the trained generative model (G) obtains a reconstruction of the missing data part of the data instance in the form of a synthetized output instance;
- imputating the missing data part of the data instance ($x^*$) using the reconstruction of the data instance.

Here, missing data imputation may refer to the 'filling-in' of missing or otherwise corrupt data and may thereby repairing a corrupt data instance.

It will be appreciated by those skilled in the art that two or more of the above-mentioned embodiments, implementations, and/or optional aspects of the invention may be combined in any way deemed useful.

Modifications and variations of any system, any computer-implemented method or any computer-readable medium, which correspond to the described modifications and variations of another one of said entities, can be carried out by a person skilled in the art on the basis of the present description.

## BRIEF DESCRIPTION OF THE DRAWINGS

These and other aspects of the invention will be apparent from and elucidated further with reference to the embodiments described by way of example in the following description and with reference to the accompanying drawings, in which

Fig. 1 shows a computer-implemented method for training a generative adversarial network in which a generative model and a discriminative model are alternately trained and in which the adversarial loss is replaced by a reformulated classification loss;

Fig. 2 illustrates the training of the discriminative model;

Fig. 3 shows a system for training a generative adversarial network;

Fig. 4 shows a system for data synthesis using a trained generative model;

Fig. 5 shows a computer-implemented method for data synthesis using a trained generative model, which further comprises training a machine learnable model, such as a neural network, using data which is synthesized by the trained generative model;

Fig. 6 shows a computer-implemented method for anomaly detection using a trained generative model;

Fig. 7 shows a computer-implemented method for missing data imputation using a trained generative model;

Fig. 8 shows an autonomous vehicle comprising a control system which uses a machine learned model which was trained using a supervised learning technique and using labelled data synthesized by the trained generative model; and

Fig. 9 shows a computer-readable medium comprising data.

It should be noted that the figures are purely diagrammatic and not drawn to scale. In the figures, elements which correspond to elements already described may have the same reference numerals.

**List of reference numbers**

The following list of reference numbers is provided for facilitating the interpretation of the drawings and shall not be construed as limiting the claims.

| | |
|---|---|
| 100 | method for training generative adversarial network |
| 110 | accessing generative model data |
| 120 | accessing training data for generative adversarial network |
| 130 | training discriminative model |
| 140 | assigning generator input labels to further set of classes |
| 150 | training discriminative model on input instances |
| 160 | training generative model |
| 170 | obtaining informative signal from discriminative model |
| | |
| 200 | system for training generative adversarial network |
| 220 | data storage interface |
| 240 | data storage |
| 242 | generative model data |
| 244 | training data |
| 246 | trained generative model data |
| | |
| 300 | system for data synthesis using trained generative model |
| 320 | data storage interface |
| 340 | data storage |
| 342 | synthesized data |
| 344 | model data represent machine learned model |
| | |
| 400 | using trained generative model for data synthesis |
| 410 | sampling latent vector from latent space |
| 420 | selecting generator input label from set of classes |
| 430 | using trained generative mode to obtain synthesized output |
| 440 | training machine learnable model using synthesized output |
| | |
| 500 | using trained generative model for anomaly detection |
| 510 | obtaining data instance |
| 520 | obtaining prediction of label for data instance |
| 530 | searching for latent vector |
| 540 | determining whether data instance represents anomaly |
| | |
| 600 | using trained generative model for processing corrupted data |
| 610 | obtaining data instance |
| 620 | searching for combination of latent vector and label |
| 630 | generating repaired version of data instance |

700 environment
710 autonomous vehicle
720 image sensor
730 electric motor
740 control system using machine learned model

800 computer-readable medium
810 non-transitory data

## DETAILED DESCRIPTION OF EMBODIMENTS

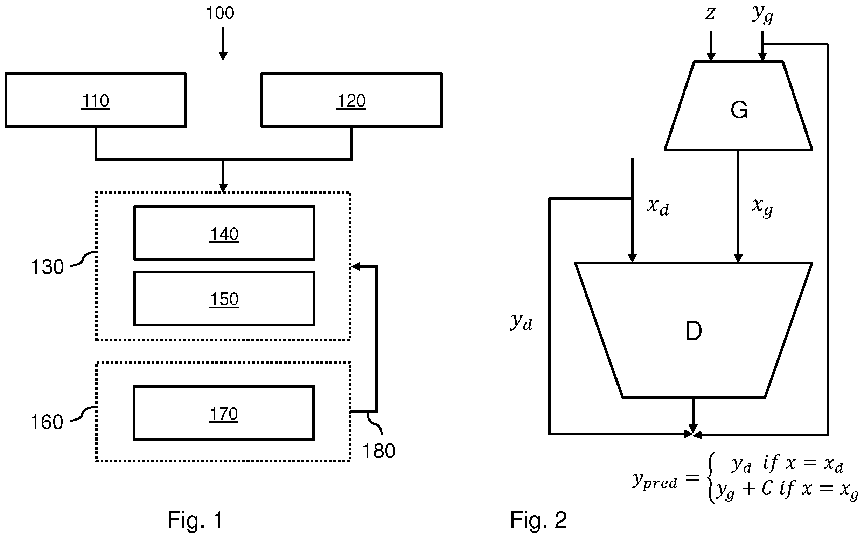

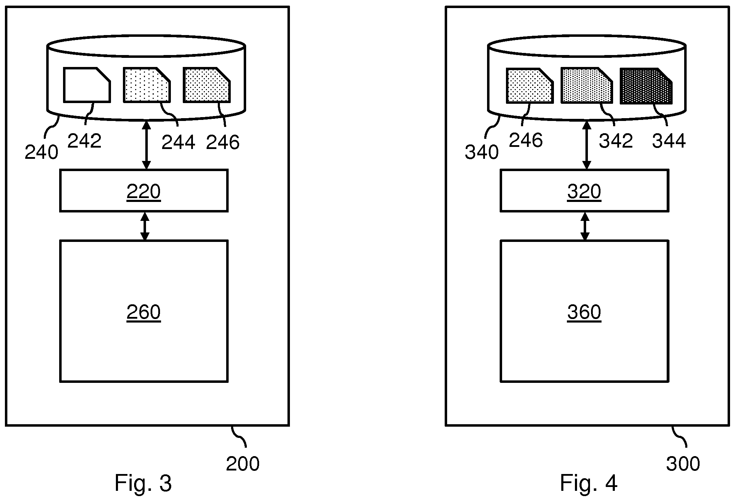

The following relates to training a generative adversarial network (GAN) and to various applications (uses) of a trained generative model of the trained GAN. Specifically, the training of the GAN is described with reference to Figs. 1-3, while such various uses of the trained generative model of the trained GAN are described with reference to Figs. 4-8.

Fig. 1 shows a computer-implemented method 100 for training a generative adversarial network. The method 100 is shown to comprise, in a step titled "ACCESSING GENERATIVE MODEL DATA", accessing 110 generative model data defining a generative adversarial network comprising a generative model and a discriminative model, and in a step titled "ACCESSING TRAINING DATA FOR GENERATIVE ADVERSARIAL NETWORK", accessing 120 training data for the generative adversarial network comprising training data instances and training data labels, wherein the data labels represent classes from a set of classes. The methods 100 further comprises alternatingly training the generative model and the discriminative model (illustrated by arrow 180). The training 130 of the discriminative model shown to comprise, in a step titled "ASSIGNING GENERATOR INPUT LABELS TO FURTHER SET OF CLASSES", generating 140 prediction targets for the synthesized output instances by assigning the generator input labels to a further set of classes in which each class of the set of classes is represented by a corresponding further class, and in a step titled "TRAINING DISCRIMINATIVE MODEL ON INPUT INSTANCES", training 150 the discriminative model on the training data instances and the synthesized output instances using respective prediction targets, wherein the prediction targets for the training data instances are the training data labels. The training 160 of the generative model shown to comprise, in a step titled "OBTAINING INFORMATIVE SIGNAL FROM DISCRIMINATIVE MODEL", training 170 the generative model using an informative signal obtained from the discriminative model, wherein the informative signal is a function of respective conditional probabilities that, according to the discriminative model, an input instance belongs to a class of the set of classes or to a corresponding class of the further set of classes.

The following describes the training of the GAN in more detail, and may represent embodiments of the above-mentioned computer-implemented method 100. However, the actual implementation of the training may be carried out in various other ways, e.g., on the basis of analogous mathematical concepts.

Briefly speaking, the training of a GAN may comprise training two machine learnable models, such as neural networks, which may respectively model the discriminator and the generator. As shown in **Fig. 2**, the generator G may take $(y_g, z)$ as its input, where $z$ may be a latent vector sampled from a latent space, and may synthesize $x_g$, representing a synthesized output instance. The discriminator D in general may take input $x$ and may predict its label $y$. The training objective of D may be to classify an input $x$ from both the data distribution (of the training data, $x_d$) and the model distribution (as modeled by the generator G, $x_g$). For an input instance $x_d$ drawn from the training data set, the original data label $y_d$ may be the prediction target $y_{pred}$. For an input instance $x_g$ generated by the generator G, the prediction target $y_{pred}$ may be its input label $y_g$ reassigned to a different set of classes, for example by adding a constant $C$ which may correspond to the number of classes in the data set. The training objective of the generator G may be to generate $x_g = G(y_g, z)$ such that the discriminator D yields a high confident prediction on the class $y_{pred} = y_g$. This may represent a wrong prediction according to the objective of discriminator D, which may be trained to predict $y_{pred} = y_g + C$. Therefore, the goal of the generator G may be to confuse the discriminator D with the training data instances and synthetic output instances so that it classifies $y_d = y_g$. The generator G and the discriminator D may be trained in an alternating manner (not shown in Fig. 2). After training, the generator G may generate class-dependent samples, e.g., for data synthesis purposes, by selecting $y_g$ and thereby selecting a target class and by randomly sampling $z$ from the latent space.

With continued reference to Fig. 2, one may consider the data $x$ of which the distribution is to be modeled, i.e., the training data, and its class labels $y \in \{0, 1, ..., C - 1\}$, to follow the distribution $P_d(x, y)$. The generative model distribution which may be modeled by the generator function $G(y, z)$ may be denoted by as $P_g(x, y)$, where $z \sim P(z)$ maybe the noise vector, i.e., a latent vector which may be randomly sampled from the latent space.

A goal of the training of the GAN may be to train the generative model or generative function G such that $P_d(x,y) = P_g(x, y)$. Accordingly, as is known per se, GAN training may be considered as involving two players: one player termed the 'discriminator' may estimate the difference between the two distributions, while the other player termed the 'generator' may try to minimize this difference. However, unlike known approaches for GAN training, a distribution $P(x,y)$ may be constructed from $P_d(x,y)$ and $P_g(x, y)$:

$$P(x,y) = \begin{cases} 0.5\, P_d(x,y) & if\ y \in \{0,1,\dots,C-1\} \\ 0.5\, P_g(x, y = y - C) & if\ y \in \{C, C+1, \dots, C-1\} \end{cases}.$$

Each of $P_d$ and $P_g$ may have $C$ classes and jointly create the $2C$ classes of $P(x, y)$ by the reassigning of labels as previously described. The discriminator D may then be trained to classify an input instance $x$, being either an input instance $x_d$ drawn from the training data set or an input instance $x_g$ generated by the generator G (i.e., representing a synthetic output instance thereof). For that purpose, the discriminator D may make use of a classification loss function, which may for example be based on cross entropy loss. Accordingly, the discriminator D may effectively compute the a-posterior probability:

$$P(y|x) = \frac{P(y,x)}{P(x)} = \begin{cases} \dfrac{P_d(x,y)}{P_d(x)+P_g(x)} & if\ y \in \{0,1,\dots,C-1\} \\ \dfrac{P_g(x,y-C)}{P_d(x)+P_g(x)} & if\ y \in \{C, C+1, \dots, C-1\} \end{cases}.$$

Under this identification, the log-probability ratio of the data and model distribution at a particular class c may be evaluated as a log-probability ratio:

$$\ln\frac{P_d(x,y=c)}{P_g(x,y=c)} = \ln\frac{P(y=c|x)}{P(y=c+C|x)}.$$

The log-probability ratio is an informative signal for training the generator G, and may thus be provided by the discriminator D to the generator G during the latter's training. The loss for the generator G may be formulated as minimizing the KL divergence:

$$\min_G KL(P_g\|P_d) = \min_G E_{P_g}\{\ln\frac{P_g(x,y)}{P_d(x,y)}\} = \min_G E_{P_g}\{\ln\frac{P(y=c|x)}{P(y=c+C|x)}\},$$

where the expectation may be approximated using *minbatches*. Instead of using the KL divergence, also other divergence measures such as the KL divergence, reverse-KL divergence or JSD divergence may be used for the generator G.

If only a subset of training data samples has labels, a semi-supervised classification loss may be used for the discriminator D, which may comprise cross-entropy term(s) for the labeled data samples and entropy term(s) for the unlabeled data samples.

Fig. 3 shows a system 200 for training a generative adversarial network. The system 200 is shown to comprise an input interface 220 configured to access generative model data 242 defining a GAN, which may initially be considered an 'untrained' GAN in that parameters of the GAN may not yet be trained, or which may need to be trained further. The input interface 220 may be further configured to access training data 244 which may comprise a set of training data instances for training the GAN, e.g., images, text segments, audio segments or other type of data (instances) on which the GAN is to be trained.

As shown in Fig. 3, the input interface 220 may be a data storage interface 220 to a data storage 240 which may comprise said data 242, 244. For example, the input interface 220 may be a memory interface or a persistent storage interface, e.g., an SSD interface, but also a personal, local or wide area network interface such as a Bluetooth, Zigbee or Wi-Fi interface or an ethernet or fiberoptic interface. The data storage 240 may be an internal data storage of the system 200, but also an external data storage, e.g., a network-connected data storage. In some embodiments, the generative model data 242 and the training data 244 may be accessed from different data storages, e.g., using different sub-interfaces of the input interface 220. In other embodiments, the generative model data 242 and the training data 244 may each be accessed from a same data storage.

The system 200 is further shown to comprise a processor subsystem 260 configured to train the GAN based on the training data 244 in a manner as described elsewhere, for example with reference to Figs. 1 and 2, thereby obtaining a trained GAN.

It is noted that the input interface 220 may also be an output interface, e.g., an input-output ('I/O') interface 220. The system 200 may use the input-output interface 220 to store data, such as (parameters of) the trained GAN. For example, the system 200 may output trained generative model data 246 representing the trained generative model. In other embodiments, the system 200 may output the overall trained GAN, e.g., including the trained generative model and the trained discriminative model. While Fig. 3 shows such trained generative model data 246 to be separate from the 'untrained' generative model data 242, in other embodiments, the generative model data 242 defining the 'untrained' GAN may during or after the training be replaced by the generative model data of the trained GAN, in that parameters of the GAN may be adapted to reflect the training on the training data 244.

**Fig. 4** shows a system 300 for synthesizing data using a generative model of a trained generative adversarial network. The system 300 is shown to comprise an input interface 320 configured to access trained generative model data 246 defining at least the generative model of a GAN which is trained by the method or system as described with reference to Figs. 1-3 and elsewhere. Fig. 4 shows the generative model data 246 being accessed from a data storage 340. In some embodiments, the generative model data 246 may include also the discriminative model, while in other embodiments, the generative model data 246 may include the generative model but omit the discriminative model.

It is noted that the same implementation options may apply to the input interface 320 and the data storage 340 as previously as described for respectively the input interface 220 and the data storage 240 of the system 200 as described with Fig. 3.

The system 300 is further shown to comprise a processor subsystem 360 which may be configured to use the trained generative model for data synthesis, for example by sampling a latent vector $z$ from the latent space of the generative model, selecting a generator input label $y_g$ as a target label, and using the latent vector $z$ and the generator input label $y_g$ as input to the trained generative model to obtain a synthesized output instance $x_g$, e.g.,. a synthesized image, audio fragment, text fragment, etc. The above steps may be repeated a number of times to generate a number of synthesized output instances.

The system 300 may further comprise an output interface configured to output the synthesized output instances as synthesized data 342. In the example of Fig. 4, the input interface is an input-output ('I/O') interface, which thereby may also embody the output interface, and via which the synthesized data 344 may be stored in the data storage 340. However, the output interface may also be separate from the input interface and may be of a different type. In general, the same implementation options may apply to the output interface 320 as previously as described for the input interface 220 of system 200 of Fig. 3.

In some embodiments, the processor subsystem 360 may be further configured to train a machine learnable model, such as a neural network, using the one or more synthesized output instances 342. The resulting machine learned model may be output by the system 300, for example, by storing trained model data 344 in the data storage 340.

In some embodiments, the system 300 of Fig. 4 and the system 200 of Fig. 3 may be embodied by a same system, in that the training of the GAN and the data synthesis using the trained GAN may be performed by a same system. The same implementation options may apply for this system as previously described for the systems 200, 300.

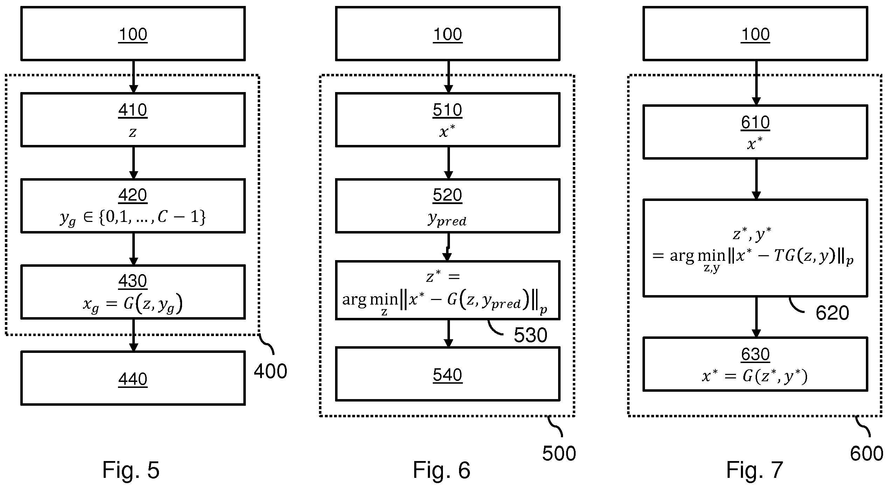

In some embodiments, the system 300 of Fig. 4 may be, as an alternative for or in addition to being configured for data synthesis, configured for using the trained generative model for anomaly detection, for example by the processor subsystem 360being configured to perform the steps as described with the method of Fig. 6. In some embodiments, the system 300 of Fig. 4 may be, as an alternative for or in addition to being configured for data synthesis and/or for anomaly detection, configured for using the trained generative model for missing data imputation, for example by the processor subsystem 360 being configured to perform the steps as described with the method of Fig. 7.

In general, each of the previously described systems, including but not limited to the system 200 of Fig. 3 and the system 300 of Fig. 4, may be embodied as, or in, a single device or apparatus, such as a workstation or a server. The server may be an embedded server. The device or apparatus may comprise one or more microprocessors which execute appropriate software. For example, the processor subsystem of the respective system may be embodied by a single Central Processing Unit (CPU), but also by a combination or system of such CPUs and/or other types of processing units. The software may have been downloaded and/or stored in a corresponding memory, e.g., a volatile memory such as RAM or a non-volatile memory such as Flash. Alternatively, the processor subsystem of a respective system may be implemented in the device or apparatus in the form of programmable logic, e.g., as a Field-Programmable Gate Array (FPGA). In general, each functional unit of the respective system may be implemented in the form of a circuit. The system may also be implemented in a distributed manner, e.g., involving different devices or apparatuses, such as distributed local or remote, e.g., cloud-based, servers.

**Fig. 5** shows a computer-implemented method 400 for data synthesis using a trained generative model. The method 400 is shown to be performed after the method 100 as described with reference to Fig. 1, and may in some embodiments represent a different computer-implemented method, e.g., to be performed by a different processor system. In other embodiments, the method 400 may comprise the steps of the method 100, e.g., as preceding steps to steps 410, 420, 430 and the optional step 440 as described below.

The method 400 may comprise, in a step titled "SAMPLING LATENT VECTOR FROM LATENT SPACE", sampling 410 a latent vector $z$ from the latent space. The method 400 may further comprise, in a step titled "SELECTING GENERATOR INPUT LABEL FROM SET OF CLASSES", selecting 420 a generator input label $y_g$ from the set of classes $\{0,1,..., C - 1\}$. The method 400 may further comprise, in a step titled "USING TRAINED GENERATIVE MODE TO OBTAIN SYNTHESIZED OUTPUT", using 430 the latent vector $z$ and the generator input label $y_g$ as input to the trained generative model to obtain a synthesized output instance. Although not explicitly shown in Fig. 5, the steps 410-430 may be repeated a number of times, e.g., sequentially and/or in parallel, to generate a number of synthesized output instances. The steps 410-430 of the method 400 may be followed by a step titled "TRAINING MACHINE LEARNABLE MODEL USING SYNTHESIZED OUTPUT", which may comprise training 440 a machine learnable model using the synthesized output instance $x_g$. In some embodiments, the step 440 may be part of the method 400. In other embodiments, the step 440 may represent a different computer-implemented method, e.g., to be performed by a different processor system.

**Fig. 6** shows a computer-implemented method 500 for anomaly detection using a trained generative model. The method 500 is shown to be performed after the method 100 as described with reference to Fig. 1, and may in some embodiments represent a different computer-implemented method, e.g., to be performed by a different processor system. In other embodiments, the method 500 may comprise the steps of the method 100, e.g., as preceding steps to the steps 510, 520, 530 and 540 as described below.

The method 500 is shown to comprise, in a step titled "OBTAINING DATA INSTANCE", obtaining 510 a data instance $x^*$. The method 500 is further shown to comprise, in a step titled "OBTAINING PREDICTION OF LABEL FOR DATA INSTANCE", obtaining 520 a prediction of a label $y_{pred}$ for the data instance $x^*$. The method 500 is further shown to comprise, in a step titled "SEARCHING FOR LATENT VECTOR", searching 530 for a latent vector $z^*$ which, when input to the trained generative model together with the label $y_{pred}$, obtains a reconstruction of the data instance $x^*$. Such

$$z^* = \arg\min_{z}\left\|x^* - G(z, y_{pred})\right\|_p,$$

searching may for example comprise searching for where $y_{pred}$ may be the predicted label for $x^*$, and which may be either produced by the discriminative model or by another, e.g., independent, classification model. The method 500 is further shown to comprise, in a step titled "DETERMINING WHETHER DATA INSTANCE REPRESENTS ANOMALY", determining 540 the data instance $x^*$ to represent an anomaly. The latter may involve determining if one or more or a particular one of the following the conditions is/are satisfied: if the latent vector $z^*$ lies outside a support of a prior distribution of the latent space, if the latent vector $z^*$ has a probability value which is below a probability threshold according to the prior distribution of the latent space, and/or if a reconstruction error of the reconstruction by the trained generative model exceeds a reconstruction error threshold.

In other words, in some embodiments of the method 500, it may be determined that the data instance $x^*$ represents an anomaly by evaluating a select one of the above conditions. In other embodiments of the method 500, several conditions may be evaluated, in parallel or sequentially, and it may be determined the data instance $x^*$ represents an anomaly if at least one or several of these conditions are satisfied.

**Fig. 7** shows a computer-implemented method 600 for missing data imputation using a trained generative model. The method 600 is shown to be performed after the method 100 as described with reference to Fig. 1, and may in some embodiments represent a different computer-implemented method, e.g., to be performed by a different processor system. In other embodiments, the method 600 may comprise the steps of the method 100, e.g., as preceding steps to the here described steps 610, 620, and 630.

The method 600 is shown to comprise, in a step titled "OBTAINING DATA INSTANCE", obtaining 610 a data instance $x^*$ which has a missing data part. The method 600 is further shown to comprise, in a step titled "SEARCHING FOR COMBINATION OF LATENT VECTOR AND LABEL", searching 620 for a combination of a latent vector $z^*$ and a label $y$ which according to the trained generative model G obtains a reconstruction of the missing data part of the data instance in the form of a synthetized output instance. Such searching may for example comprise searching for

$$z^*, y^* = \arg\min_{z,y}\left\|x^* - TG(z, y)\right\|_p,$$

where $T$ may be a function which may mask-out data elements in the synthesized output instance which correspond to the corrupted or missing data elements in $x^*$. Such masking-out may result in such data elements not contributing to the above minimization. For example, in case of a corrupted image $x^*$, some pixels of the corrupted image may not contain image values or may in any other way be corrupted. $T$ may be a matrix masking-out these pixels on the synthetic image $G(z,y)$. The searching may comprise searching for $(z^*, y^*)$ such that $G(z^*, y^*)$ may synthesize an image which reconstructs the uncorrupted part of the corrupted image $x^*$. The method 600 is further shown to comprise, in a step titled "GENERATING REPAIRED VERSION OF DATA INSTANCE", imputating 630 the missing data part of the data instance $x^*$ using the reconstruction of the data instance. For example, $G(z^*, y^*)$ may be used as a repaired version, or to generate such a repaired version, of $x^*$.

It will be appreciated that, in general, the operations or steps of the computer-implemented methods 100, 400, 500 and 600 may be performed in any suitable order, e.g., consecutively, simultaneously, or a combination thereof, subject to, where applicable, a particular order being necessitated, e.g., by input/output relations.

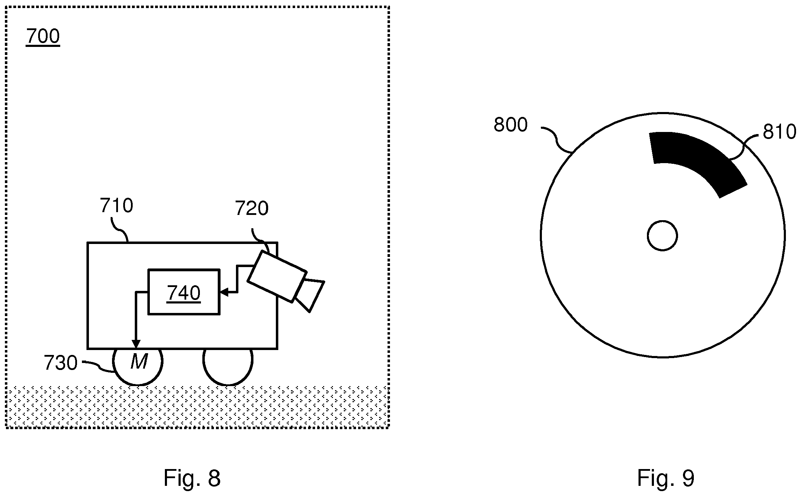

**Fig. 8** shows an autonomous vehicle 710 which operates in an environment 700. The autonomous vehicle 710 may comprise a control system 740 which may use a machine learned model which may have been learned using data synthesized by the system 300 of Fig. 4 or the computer-implemented method 400 of Fig. 5. For example, the machine learned model may have been learned based on synthetic images which may represent near collisions with an obstacle. The control system 730 may use the machine learned model on image data acquired by an image sensor 720 to control a steering and/or a braking of the autonomous vehicle 710, for example by controlling an electric motor 730.

In general, such a machine learned model may be used for the control or monitoring of a physical entity such as a vehicle, robot, etc., or a connected or distributed system of physical entities, e.g., a lighting system, or any other type of physical system, e.g., a building. In some examples, the control may be performed by a control system which may be part of the physical entity and which may comprise the machine learned model.

Any method described in this specification may be implemented on a computer as a computer-implemented method, as dedicated hardware, or as a combination of both. As also illustrated in **Fig. 9,** instructions for the computer, e.g., executable code, may be stored on a computer-readable medium 800, e.g., in the form of a series 810 of machine-readable physical marks and/or as a series of elements having different electrical, e.g., magnetic, or optical properties or values. The executable code may be stored in a transitory or non-transitory manner. Examples of computer-readable mediums include memory devices, optical storage devices, integrated circuits, etc. Fig. 9 shows an optical disc 800. In an alternative embodiment of the computer-readable medium 800, the computer-readable medium 800 may comprise transitory or non-transitory data 810 representing a trained generative model as described elsewhere in this specification.

Examples, embodiments or optional features, whether indicated as nonlimiting or not, are not to be understood as limiting the invention as claimed.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of" when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. **A computer-implemented** method (100) for training a generative adversarial network (GAN), the method comprising:

   - accessing (110, 120):

     - generative model data defining a generative adversarial network comprising a generative model (G) and a discriminative model (D),
     - training data for the generative adversarial network comprising training data instances ($x_d$) and training data labels ($y_d$), wherein the data labels ($y_d$) represent classes from a set of classes ($\{0,1,..., C - 1\}$);

     wherein the generative model (G) is configured to generate synthesized output instances ($x_g$) based on latent vectors ($z$) sampled from a latent space and based on generator input labels ($y_g$) selected from the set of classes ($\{0,1,..., C - 1\}$), and wherein the discriminative model (D) is configured to classify input instances ($x$);
     - alternatingly training the generative model and the discriminate model,

     wherein training (130) the discriminative model (D) comprises training (150) the discriminative model (D) on the training data instances ($x_d$) and the synthesized output instances ($x_g$) using respective prediction targets ($y$), wherein the prediction targets for the training data instances ($x_d$) are the training data labels ($y_d$), and wherein the prediction targets for the synthesized output instances ($x_g$) are generated by assigning (140) the generator input labels ($y_g$) to a further set of classes ($\{C, C + 1, ...,2C - 1\}$) in which each class ($c$) of the set of classes is represented by a corresponding further class ($c + C$);
     wherein training (160) the generative model (G) comprises training (170) the generative model (G) using an informative signal obtained from the discriminative model (D), wherein the informative signal is a function of respective conditional probabilities that, according to the discriminative model (D), an input instance ($x$) belongs to a class ($y = c$) of the set of classes or to a corresponding class ($y = c + C$) of the further set of classes.

2. The computer-implemented method (100) according to claim 1, wherein the informative signal comprises a log-probability ratio $\left(\ln \dfrac{P(y = c|x)}{P(y = c + C|x)}\right)$ of a first conditional probability ($P(y = c|x)$) that the input instance ($x$) belongs to the class ($y = c$) of the set of classes and a second conditional probability ($P(y = c + C|x)$) that the input instance ($x$) belongs to the corresponding class ($y = c + C$) of the further set of classes.

3. The computer-implemented method (100) according to claim 1, wherein training the generative model (G) comprises minimizing the KL divergence $\left(\min_G KL(P_g || P_d)\right)$ using the log-probability ratio of the first conditional probability and the second conditional probability.

4. The computer-implemented method (100) according to any one of claims 1 to 3, wherein the labels define numerical classes from 0 to $C - 1$, and wherein assigning (140) the generator input labels ($y_g$) to the further set of classes ({$C$, $C + 1$, ...,$2C - 1$}) comprises adding a constant $C$ to a numerical class ($c$) of a respective generator input label.

5. The computer-implemented method (100) according to any one of claims 1 to 4, wherein the training (130) of the discriminative model (D) comprises using a classification loss term while omitting using an adversarial loss term.

6. The computer-implemented method (100) according to any one of claims 1 to 5, further comprising outputting trained model data representing at least the trained generative model of the trained generative adversarial network.

7. The computer-implemented method according to any one of claims 1 to 6, further comprising using (400) the trained generative model for data synthesis by:

   - sampling (410) a latent vector ($z$) from the latent space;
   - selecting (420) a generator input label ($y_g$) from the set of classes ((0,1,..., $C - 1$));
   - using (430) the latent vector ($z$) and the generator input label ($y_g$) as input to the trained generative model to obtain a synthesized output instance ($x_g$).

8. The computer-implemented method according to claim 7, further comprising training (440) a machine learnable model using the synthesized output instance ($x_g$).

9. The computer-implemented method according to any one of claims 1 to 6, further comprising using (500) the trained generative model for anomaly detection by:

   - obtaining (510) a data instance ($x^*$);
   - obtaining (520) a prediction of a label ($y_{pred}$) for the data instance ($x^*$);
   - searching (530) for a latent vector ($z^*$) which, when input to the trained generative model together with the label ($y_{pred}$), obtains a reconstruction of the data instance ($x^*$);
   - determining (540) the data instance ($x^*$) to represent an anomaly if, at least one of:

      - the latent vector ($z^*$) lies outside a support of a prior distribution of the latent space;
      - the latent vector ($z^*$) has a probability value which is below a probability threshold according to the prior distribution of the latent space; and
      - a reconstruction error of the reconstruction by the trained generative model exceeds a reconstruction error threshold.

10. The computer-implemented method according to any one of claims 1 to 6, further comprising using (600) the trained generative model for missing data imputation by:

    - obtaining (610) a data instance ($x^*$) which has a missing data part;
    - searching (620) for a combination of a latent vector ($z^*$) and a label ($y$) which according to the trained generative model (G) obtains a reconstruction of the missing data part of the data instance in the form of a synthetized output instance;
    - imputating (630) the missing data part of the data instance ($x^*$) using the reconstruction ($G(z^*,y^*)$) of the data instance.

11. A computer-readable medium (800) comprising transitory or non-transitory data (810) representing a computer program, the computer program comprising instructions for causing a processor system to perform the method according to any one of claims 1 to 10.

12. A computer-readable medium (800) comprising transitory or non-transitory data (810) representing a trained generative model which is obtained by the method according to any one of claims 1 to 6.

13. A system (200) for training a generative adversarial network (GAN), the system comprising:

- an input interface (220) configured to access:

- generative model data (242) defining a generative adversarial network comprising a generative model (G) and a discriminative model (D),
- training data (244) for the generative adversarial network comprising training data instances ($x_d$) and training data labels ($y_d$), wherein the data labels ($y_d$) represent classes from a set of classes ($\{0,1,..., C - 1\}$);

wherein the generative model (G) is configured to generate synthesized output instances ($x_g$) based on latent vectors ($z$) sampled from a latent space and based on generator input labels ($y_g$) selected from the set of classes ($\{0,1,..., C - 1\}$), and wherein the discriminative model (D) is configured to classify input instances ($x$);
- a processor subsystem (260) configured to alternatingly train the generative model and the discriminate model, wherein training the discriminative model (D) comprises training the discriminative model (D) on the training data instances ($x_d$) and the synthesized output instances ($x_g$) using respective prediction targets ($y$), wherein the prediction targets for the training data instances ($x_d$) are the training data labels ($y_d$), and wherein the prediction targets for the synthesized output instances ($x_g$) are generated by assigning the generator input labels ($y_g$) to a further set of classes ($\{C, C + 1, ...,2C - 1\}$) in which each class ($c$) of the set of classes is represented by a corresponding further class ($c + C$);

wherein training the generative model (G) comprises training the generative model (G) using an informative signal obtained from the discriminative model (D), wherein the informative signal is a function of respective conditional probabilities that, according to the discriminative model (D), an input instance ($x$) belongs to a class ($y = c$) of the set of classes or to a corresponding class ($y = c + C$) of the further set of classes.

14. The system (200, 300) according to claim 13, wherein the processor subsystem (260, 360) is further configured to use the trained generative model for data synthesis by:

- sampling a latent vector ($z$) from the latent space;
- selecting a generator input label ($y_g$) from the set of classes ($\{0,1,..., C - 1\}$);
- using the latent vector ($z$) and the generator input label ($y_g$) as input to the trained generative model to obtain a synthesized output instance ($x_g$, 342).

15. The system (200, 300) according to claim 14, wherein the processor subsystem (260, 360) is further configured to train a machine learnable model using the synthesized output instance ($x_g$, 342), and wherein the system comprises an output interface (220, 320) for outputting model data representing the trained machine learnable model.

Fig. 1

$$y_{pred} = \begin{cases} y_d & if\ x = x_d \\ y_g + C & if\ x = x_g \end{cases}$$

Fig. 2

Fig. 4

300

344

342

246

340

320

360

Fig. 3

200

246

244

242

240

220

260

```
┌─────────────────────┐
│        100          │
└─────────────────────┘
           │
┌ ─ ─ ─ ─ ─ ┼ ─ ─ ─ ─ ─ ┐
┊ ┌─────────────────────┐ ┊
┊ │        410          │ ┊
┊ │         z           │ ┊
┊ └─────────────────────┘ ┊
┊          │              ┊
┊ ┌─────────────────────┐ ┊
┊ │        420          │ ┊
┊ │ yg ∈ {0,1,…,C − 1}  │ ┊
┊ └─────────────────────┘ ┊
┊          │              ┊
┊ ┌─────────────────────┐ ┊
┊ │        430          │ ┊
┊ │   xg = G(z, yg)     │ ┊
┊ └─────────────────────┘ ┊
└ ─ ─ ─ ─ ─ ┼ ─ ─ ─ ─ ─ ┘
           │
┌─────────────────────┐
│        440          │        400
└─────────────────────┘
```

Fig. 5

$y_g \in \{0,1,\dots,C-1\}$

$x_g = G(z, y_g)$

```
┌─────────────────────┐
│        100          │
└─────────────────────┘
           │
┌ ─ ─ ─ ─ ─ ┼ ─ ─ ─ ─ ─ ┐
┊ ┌─────────────────────┐ ┊
┊ │        510          │ ┊
┊ │         x*          │ ┊
┊ └─────────────────────┘ ┊
┊          │              ┊
┊ ┌─────────────────────┐ ┊
┊ │        520          │ ┊
┊ │       ypred         │ ┊
┊ └─────────────────────┘ ┊
┊          │              ┊
┊ ┌─────────────────────┐ ┊
┊ │       z* =          │ ┊
┊ │ arg min‖x*−G(z,ypred)‖p │ ┊
┊ │    z                │ ┊
┊ └─────────────────────┘ ┊
┊          │         530   ┊
┊ ┌─────────────────────┐ ┊
┊ │        540          │ ┊
┊ └─────────────────────┘ ┊
└ ─ ─ ─ ─ ─ ┼ ─ ─ ─ ─ ─ ┘
                          500
```

Fig. 6

$z^* = \arg\min_z \lVert x^* - G(z, y_{pred}) \rVert_p$

```
┌─────────────────────┐
│        100          │
└─────────────────────┘
           │
┌ ─ ─ ─ ─ ─ ┼ ─ ─ ─ ─ ─ ┐
┊ ┌─────────────────────┐ ┊
┊ │        610          │ ┊
┊ │         x*          │ ┊
┊ └─────────────────────┘ ┊
┊          │              ┊
┊ ┌─────────────────────┐ ┊
┊ │      z*, y*         │ ┊
┊ │ = arg min‖x*−TG(z,y)‖p │ ┊
┊ │     z,y             │ ┊
┊ └─────────────────────┘ ┊
┊          │        620    ┊
┊ ┌─────────────────────┐ ┊
┊ │        630          │ ┊
┊ │   x* = G(z*, y*)    │ ┊
┊ └─────────────────────┘ ┊
└ ─ ─ ─ ─ ─ ─ ─ ─ ─ ─ ─ ┘
                          600
```

Fig. 7

$z^*, y^* = \arg\min_{z,y} \lVert x^* - TG(z, y) \rVert_p$

$x^* = G(z^*, y^*)$

Fig. 8

Fig. 9

EP 3 792 830 A1

Europäisches
Patentamt

European
Patent Office

Office européen
des brevets

# EUROPEAN SEARCH REPORT

Application Number

EP 19 19 6417

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DEFA ZHU ET AL: "UGAN: Untraceable GAN for Multi-Domain Face Translation", ARXIV.ORG, CORNELL UNIVERSITY LIBRARY, 201 OLIN LIBRARY CORNELL UNIVERSITY ITHACA, NY 14853, 26 July 2019 (2019-07-26), XP081449491, * sections 2 and 3 * | 1-15 | INV. G06N3/04 G06N3/08 |
| A | Che-Han Chang ET AL: "KG-GAN: knowledge-guided generative adversarial networks", arXiv:1905.12261v1 [cs.CV], 29 May 2019 (2019-05-29), XP055675491, Retrieved from the Internet: URL:https://arxiv.org/pdf/1905.12261v1.pdf [retrieved on 2020-03-10] * the whole document * | 1-15 | |
| A | MICHA LIVNE ET AL: "TzK: Flow-Based Conditional Generative Model", ARXIV.ORG, CORNELL UNIVERSITY LIBRARY, 201 OLIN LIBRARY CORNELL UNIVERSITY ITHACA, NY 14853, 22 April 2019 (2019-04-22), XP081161804, * the whole document * | 1-15 | TECHNICAL FIELDS SEARCHED (IPC) G06N |
| A | GUILLERMO L GRINBLAT ET AL: "Class-Splitting Generative Adversarial Networks", ARXIV.ORG, CORNELL UNIVERSITY LIBRARY, 201 OLIN LIBRARY CORNELL UNIVERSITY ITHACA, NY 14853, 17 May 2018 (2018-05-17), XP081315751, * the whole document * | 1-15 | |

The present search report has been drawn up for all claims

| Place of search | Date of completion of the search | Examiner |
|---|---|---|
| The Hague | 10 March 2020 | Douarche, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)